# EUROPEAN PATENT APPLICATION

(11) **EP 0 633 573 A2**
(43) Date of publication of application: **11.01.1995**
(21) Application number: 94110586.8
(22) Date of filing: 07.07.1994
(51) Int. Cl.: G11B 23/023

(54) **Videocassette-cover case**

(30) Priority: 08.07.1993 JP 194114/93
(71) Applicant: Kabushiki Kaisha Nihon Video Center, Nakamura-Ku, Nagoya (JP)
(72) Inventor: Kondo, Tadami, Kaizu-gun, Gifu-ken (JP)
(74) Representative: Goddar, Heinz J., Dr.

(57) **Abstract**

A videocassette-cover case having a box-shape is used for stowing a videocassette or a box-shaped rental case in which the videocassette is to be put. The cover case comprises a top section, two wider-side sections, two narrower-side sections, and a bottom section. At least the top section which can be opened in such a manner to get in and out the rental case and at least one of said side sections has a projecting stopper on an inside thereof. A projection size of the stopper is designed in such a manner that a bottom of the rental case touches the stopper so that an upper portion of the rental case projects above an upper surface of the cover case by a required amount when the rental case is inserted into the cover case through the open top section and in such a manner that the stopper does not prevent the videocassette from being stowed in the cover case so that the videocassette can be completely stowed in the cover case.

## Description

### BACKGROUND OF THE INVENTION

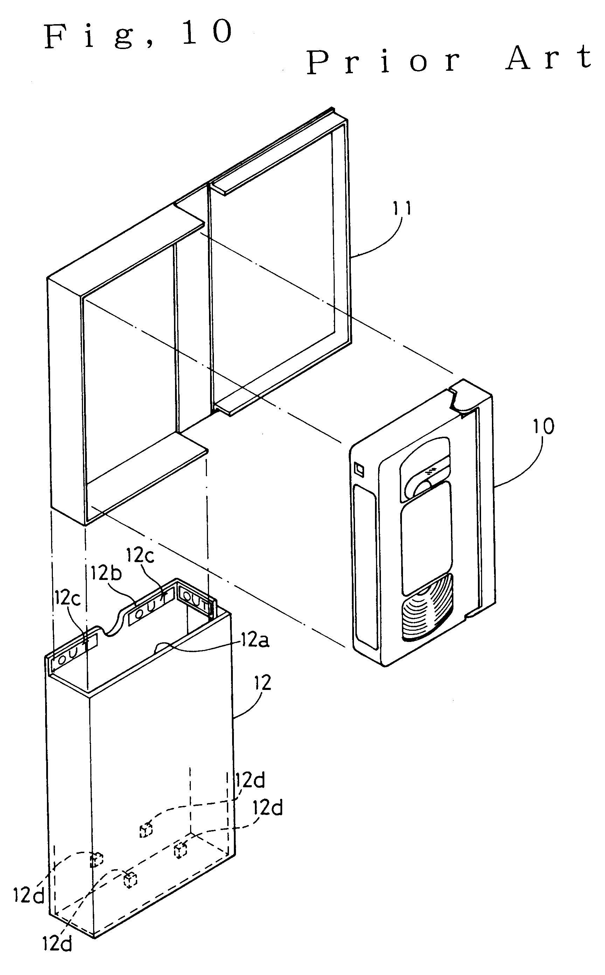

In a videocassette-rental shop, a videocassette 10 is stowed in a transparent or a semi-transparent box-shaped rental case 11 with one broader side openable, the rental case 11 is put in a display case 12, and the display case 12 is displayed, as illustrated in Fig. 10.

The display case 12 of such a type has an opening 12a on an upper surface thereof, an projection 12b along the opening 12a, and stoppers 12d inside the both broader sides thereof, said projection 12b having a display seal 12c of OUT.

According to such a construction, when the rental case 11 in which the video cassette 10 is stowed is inserted into the display case 12 through the opening 12a, a bottom of the rental case 11 touches the stoppers 12d, which prevent further entrance of the rental case 11 into the display case 12, so that an upper portion of the rental case 11 projects above the opening 12a by a determined size, thereby covering the seal 12c.

While a desired videocassette 10 is being rented, the seal 12c on which OUT is marked appears. Thus, customers can know at a glance whether or not a desired videocassette 10 is being rented.

Normally, a videocassette 10 on sale is stowed in a box-shaped cover case with one broader side openable, said cover case having the same construction with that of the rental case 11. A cover case of this kind is normally opaque. Thus, it is impossible to know at a glance whether or not a videocassette 10 is put in the cover case.

For this reason, a videocassette-rental shop uses a transparent or a semi-transparent rental case 11 to contain a videocassette 10. In a videocassette-rental shop,to display a videocassette 10, with a videocassette 10 put in the rental case 11, the renal case 11 is put in a display case 12.

A videocassette-rental shop needs a transparent or semi-transparent rental case 11 and a display case 12 for containing the rental case 11 to display a videocassette 10. Further, a cover case attached to a videocassette 10 on sale is not needed. This results in an uneconomical usage of the rental case 11 and the display case 12.

### SUMMARY OF THE INVENTION

It is, accordingly, a primary object of th present invention to provide a videocassette-cover case which is available for a display case in a videocassette-rental shop.

To attain the above object, there is provided in the invention the videocassette-cover case having a box-shape for stowing a videocassette or a box-shaped rental case in which the videocassette is to be put, said cover case comprising a top section, two wider-side sections, two narrower-side sections, and a bottom section, at least the top section which can be opened in such a manner to get in and out the rental case, at least one of said side sections having a projecting stopper on an inside thereof, said stopper whose projection size is designed in such a manner that a bottom of the rental case touches the stopper so that an upper portion of the rental case projects above an upper surface of the videocassette-cover case by a required amount when the rental case is inserted into the cover case through the open top section and in such a manner that the stopper does not prevent the videocassette from being stowed in the cover case so that the videocassette can be completely stowed in the cover case.

According to the above cover case, the upper portion of the rental case with the videocassette put therein projects above the upper surface of the cover case by the required amount when the rental case is inserted into the cover case through the open top section. Thus, if the cover case of the present invention is used as a display case in a videocassette-rental shop, customers can know at a glance whether or not a desired videocassette is being rented. Accordingly, the videocassette-rental shop does not need a display case. Meanwhile, when the videocassette which is not put in the rental case is inserted into the cover case, the stopper does not prevent the videocassette from being stowed in the cover case so that the videocassette can be completely stowed in the cover case. Accordingly, the cover case of the present invention can be also used as a normal case for stowing the videocassette.
To attain the above object, the cover case is characterized in that holding means for holding the open top section to stand along the rear section from an upper end of the cover case is provided.
Further, the cover case is characterized in that indication means for indicating the videocassette is being rented is provided on an inside of the top section.
According to the above cover case having the above-mentioned features, the top section can be assembled on the cover case in such a manner as to stand along the rear section. When the rental case is inserted into the cover case, the rental case covers the indication means. Meanwhile, when the rental case is put out of the cover case, the indication means appears. Thus, customers can know easily whether or not the desired videocassette is being rented. Thus, the cover case functions effectively as a display case.

### BRIEF DESCRIPTION OF THE DRAWINGS

Fig. 1 is a perspective view showing a videocassette-cover case according to a first embodiment of the present invention.

Fig. 2 is a perspective view showing a top section of the cover case.

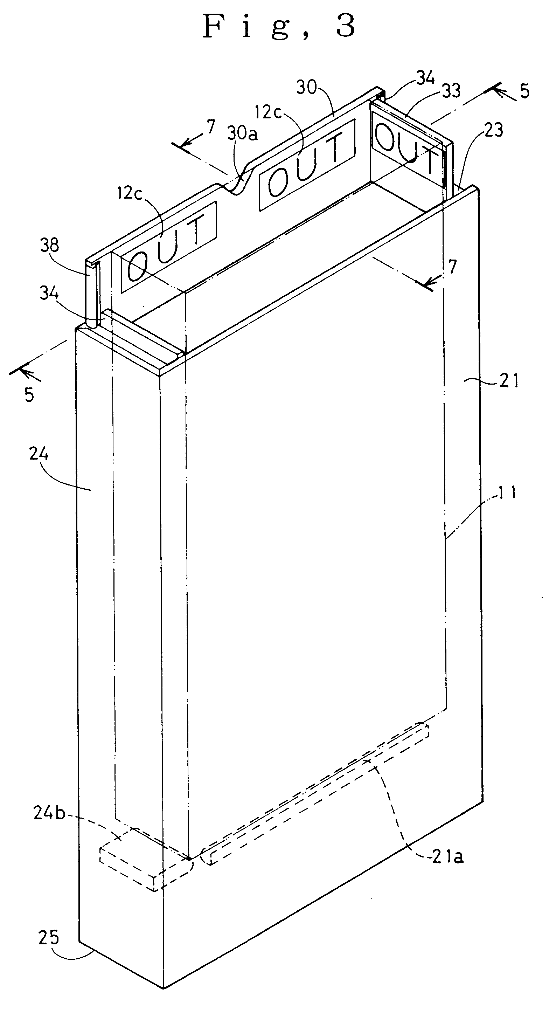

Fig. 3 is a perspective view showing the cover case on which the top section is mounted with the top section standing.

Fig. 4 is a cross-sectional view taken on 4-4 line of Fig. 1

Fig. 5 is a cross-sectional view taken on 5-5 line of Fig. 3.

Fig. 6 is a cross-sectional view taken on 6-6 line of Fig. 1.

Fig. 7 is a cross-sectional view taken on 7-7 line of Fig. 3.

Fig. 8 is a perspective view showing a principal portion of a videocassette-cover case according to a second embodiment of the present invention.

Fig. 9 is perspective view showing the top section on which a cover is mounted with the top section standing.

Fig. 10 is a perspective view showing a videocassette, a rental case, and a conventional display case.

### DESCRIPTION OF THE PREFERRED EMBODIMENT

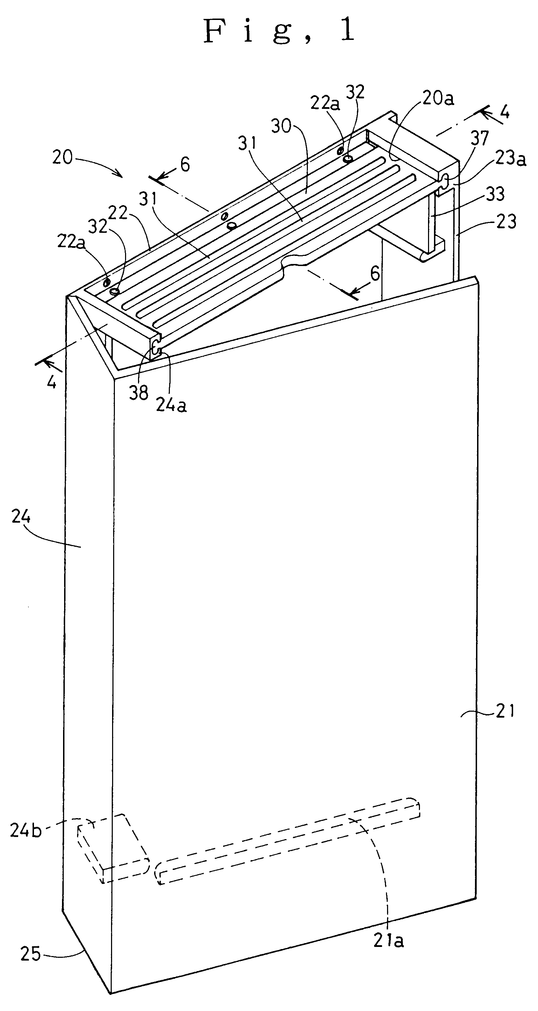

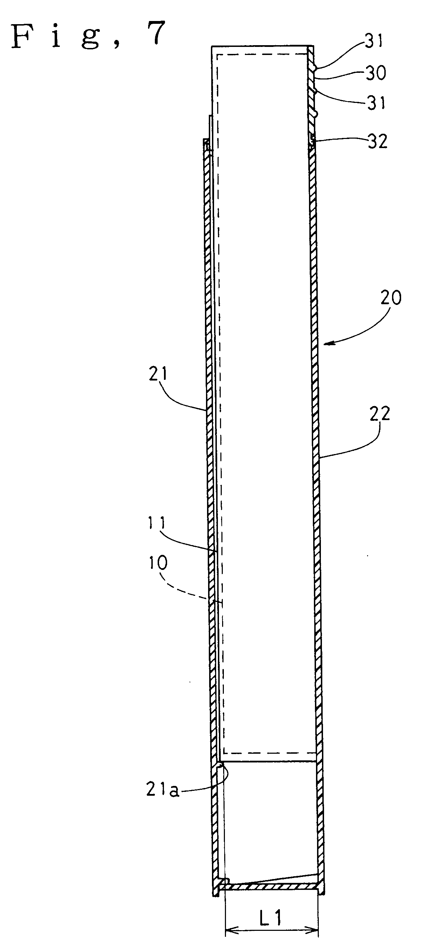

Referring to the drawing, there is shown a videocassette-cover case 20 according to the present invention. Fig. 1 and Fig. 7 show the cover case 20 according to a first embodiment of the present invention.

The cover case 20 consists of a front section 21, a rear section 22, a right section 23, a left section 24 a bottom section 25, and a top section 30. The front section 21, the rear section 22, the right section 236, the left section 24, and the bottom section 25 are molded into one body, while the top section 30 is molded separately. A portion connecting the front section 21 and the left section 24 and a portion connecting the left section 24 and the rear section 22 are molded into thin thickness. the front section 21 is detached from the right section 23. Thus, the front section 21 can be opened and with the front section 21 open, the left section 24 can be opened.

The top section 30 has three reinforcing convex stripes 31, three disc-shaped projections 32, and a notch 30a formed on a surface thereof. The stripes 31 are formed in a direction extending longitudinally of the surface of the top section 30. The projections 32 are formed along an edge of the surface of the top section 30 abutting on the rear section 22. The notch 30a is formed at the other edge of the surface of the top section 30.

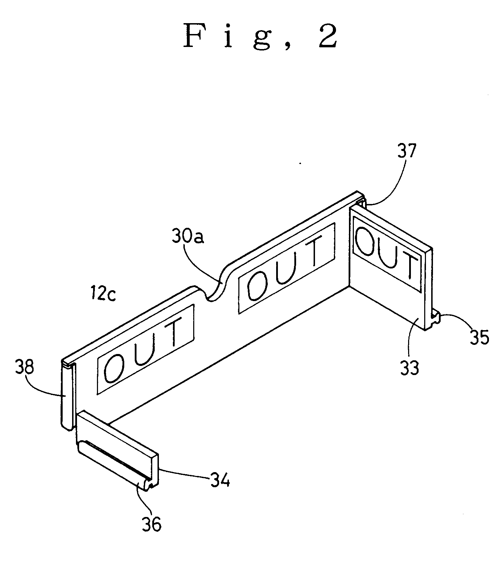

As illustrated in Fig. 2, the top section 30 has two legs 33 and 34 provided on a back thereof. The legs 33 and 34 has stripes 35 and 36 provided on ends thereof. The top section 30 has stripes 37 and 38 provided on each end thereof. Further, the top section 30 has a seal of OUT attached to the back thereof.

As illustrated in Fig. 1, the rear section 22 has three holes 22a provided inside it, said holes 22a in which the projections 32 are to be detachably set.

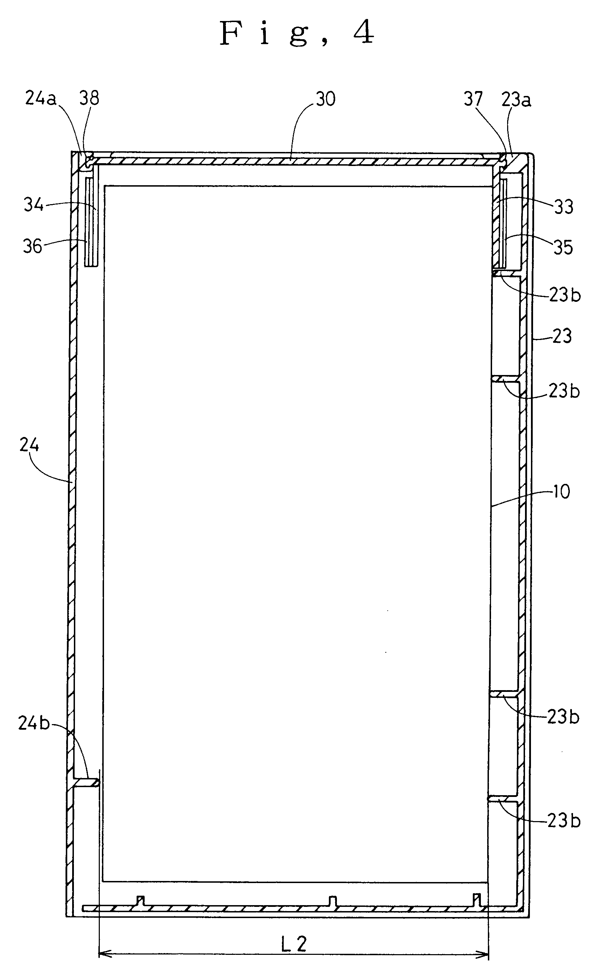

The right section 23 has a groove 23a formed at an upper end thereof, said groove 23a in which the convex stripes 35 or 37 is to be detachably set. The rear section 22 has a groove 24a in which the convex stripe 36 or 38 is to be detachably set. When the convex stripes 37 and 38 are set in the grooves 23a and 24a, the top section 30 is closed, covering an opening 20a of the cover case 20 as illustrated in Fig. 1 and Fig. 4. When the convex stripes 35 and 36 are set in the grooves 23a and 24a, the top section 30 is opened to stand along the rear section 22. While the top section 30 is opened to stand along the rear section 22, the projections 32 are set in the holes 22a. In this way, with the projections 32 set in the holes 22a, the convex stripes 35 and 36 are set in the grooves 23a and 24a, so that the top section 30 can be held standing.

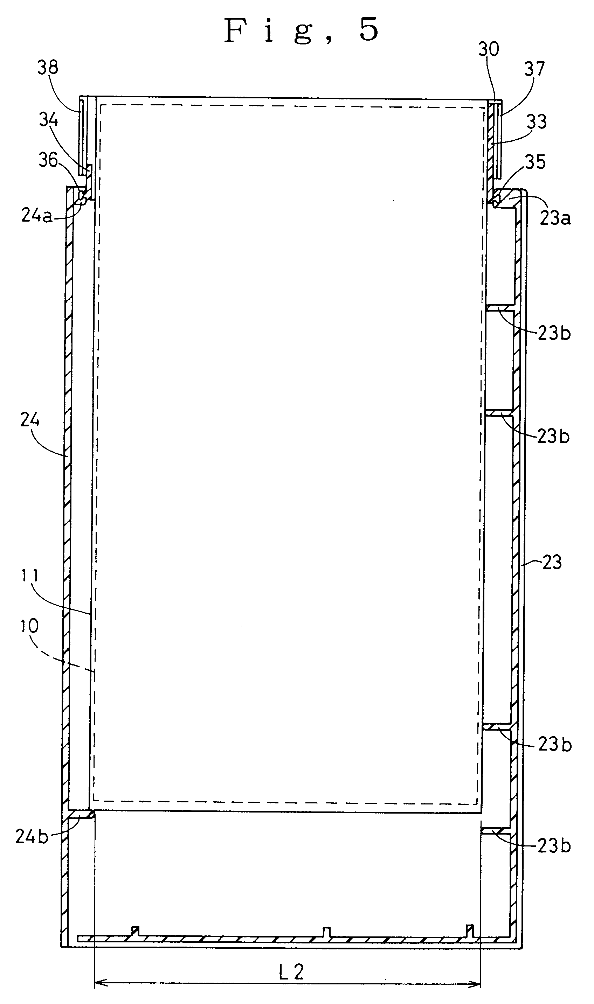

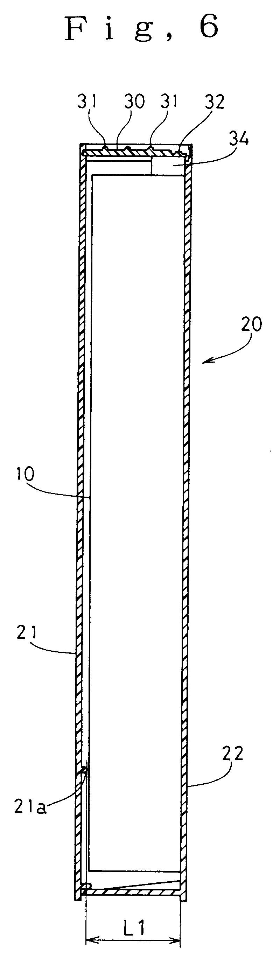

As illustrated in Fig. 4 and Fig. 5, the left section 24 also has a projecting stopper 24b provided inside it, while the right section 23 has four supporting pieces 23b provided inside it. As illustrated in Fig. 6 and Fig. 7, the front section 21 has a projecting stopper 21a provided inside it. The height of the stoppers 21a and 24b from the bottom section 25 is designed to conform to a breadth of the top section 30. The stoppers 21a and 24b has a required projection size. That is, an interval L1 between the rear section 22 and an end of the stopper 21a is smaller than a thickness of the rental case 11 and is larger than a thickness of the videocassette 10. Meanwhile, an interval L2 between an end of the supporting piece 23b and an end of the stopper 24b is smaller than a width of the rental case 11 and is larger than a width of the videocassette 10. Accordingly, as illustrated in Fig. 5 and Fig. 7, when the rental case 11 in which the videocassette 10 is put is inserted into the cover case 20 through the open top section 30 with the front section 21 and the left section 24 closed, a bottom of the rental case 11 touches the stoppers 21a and 24b, which prevent further entrance of the rental case 11 into the cover case 20, so that an upper portion of the rental case 11 conforming to a shorter length of the top section 30 projects, covering the seal of OUT attached to the back of the top section 30. When the rental case 11 is put out of the cover case 20, the seal of OUT appears so that customers can know that the desired videocassette 10 put in the rental case 11 is being rented. Meanwhile, as illustrated in Fig. 4 and Fig. 6, when the videocassette 10 is inserted into the cover case 20, the stoppers 21a and 24b do not prevent the videocassette 10 from being stowed in the cover case 20 so that the videocassette 10 can be completely stowed in the cover case 20.

Thus, the cover case 20 of the first embodiment can be used to stow not only the videocassette 10 but also the rental case 11 which the videocassette 10 is put. That is, the cover case 20 with the top section 30 open can be used as a display case in a videocassette-rental shop and the cover case 20 with the top section 30 closed can be used as a normal case in a family home, said normal case in which the videocassette 10 is to be put. By opening and closing the front section, 21 the videocassette 10 can be put in and out of the normal cover case.

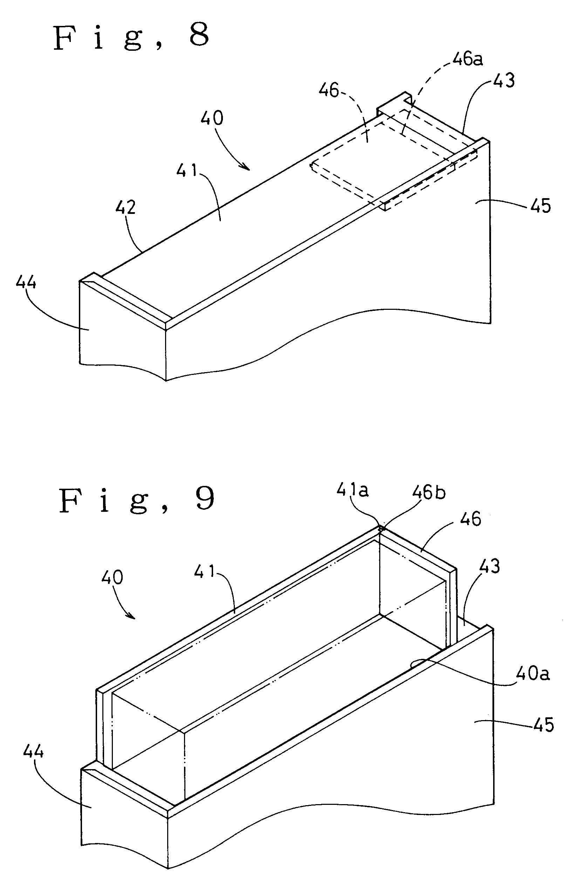

Fig. 8 and Fig. 9 show a videocassette-cover case 40 according to a second embodiment of the present invention. The cover case 40 comprises a top section 41, a rear section 42, a right section 43, a left section 44, a front section 45, and an auxiliary piece 46, which are molded into one body. A portion connecting the top section 41 and the rear section 42 is molded into thin thickness, so that the top section 41 can be opened upwardly. A portion connecting the front section 45 and the left section 44 and a portion connecting the left section 44 and the rear section 42 are molded into thin thickness. The front section 45 is detached from the right section 43. Thus, the front section 41 can be opened, and with the front section 41 open, the left section 44 can be opened. Inside the top section 41 there is an auxiliary piece 46. The auxiliary piece 46 has a thin thickness 46a, which enables the auxiliary piece 46 to open upwardly with the top section 41 open. The auxiliary piece 46 has a convex stripe 46b formed at an end thereof abutting on the rear section 42. The top section 41 has a groove 41a formed at an end thereof abutting on the front section 45. The convex stripe 46b is adapted to be detachably set in the grove 41a. As illustrated in Fig. 9, when the convex stripe 46b is set in the groove 41a with the top section 41 and the auxiliary piece 46 open upwardly, the top section 41 stands along the rear section 42 and the auxiliary piece 46 stands along the right section 43. When the rental case 11 is inserted into the cover case 40 with the top section 41 and the auxiliary piece 46 open, a bottom of the rental case 11 touches a stopper (not illustrated) provided inside the front section 45, which stopper prevent further entrance of the rental case 11 into the cover case 40 so that an upper portion of the rental case 11 projects above an upper end surface 40a. The videocassette 10 which is not put in the rental case 11 can be put in and out of the cover case 40 by opening the front section 45.

While the invention has been particularly shown described with reference to preferred embodiments thereof, it will be understood by those skilled in the art that the foregoing and other changes in from and details can be made therein without departing from the spirit and scope of the invention.

## Claims

1. A videocassette-cover case having a box-shape for stowing a videocassette or a box-shaped rental case in which the videocassette is to be put,
said cover case comprising a top section, two wider-side sections, two narrower-side sections, and a bottom section,
at least the top section which can be opened in such a manner to get in and out the rental case,
at least one of said side sections having a projecting stopper on an inside thereof, said stopper whose projection size is designed in such a manner that a bottom of the rental case touches the stopper so that an upper portion of the rental case projects above an upper surface of the cover case by a required amount when the rental case is inserted into the videocassette-cover case through the open top section, and in such a manner that the stopper does not prevent the videocassette from being stowed in the cover case so that the videocassette can be completely stowed in the cover case.

2. The cover case as claimed in claim 1, wherein the one wider-side section can be opened and closed to get in and out the videocassette or the rental case.

3. The cover case as claimed in claim 1 or 2, wherein holding means for holding the open top section to stand along the rear section from an upper end of the cover case is provided.

4. The cover case as claimed in claim 3, wherein indication means for indicating the videocassette is being rented is provided on an inside of the top section.

5. A videocassette-cover case having a box shape for stowing a videocassette or a box-shaped rental case in which the videocassette is to be put,
said cover case comprising a top section, two wider-side sections, two narrower-side sections, two narrower-side sections, a bottom section,
said top section which can be detached from the cover case to get in and out the videocassette or the rental case, and
holding means for holding the top section to stand along the rear section.

6. The cover case as claimed in claim 5, wherein indication means for indicating the videocassette is being rented is provided on an inside of the top section.
